(19) Europäisches Patentamt
European Patent Office
Office européen des brevets

(11) **EP 3 715 509 B1**

(12) **EUROPEAN PATENT SPECIFICATION**

(45) Date of publication and mention of the grant of the patent:
**13.04.2022 Bulletin 2022/15**

(21) Application number: **19833290.0**

(22) Date of filing: **10.07.2019**

(51) International Patent Classification (IPC):
**D01F 2/28** (2006.01)    **C08B 3/06** (2006.01)
**D01F 1/10** (2006.01)    **D01F 1/04** (2006.01)
**A24D 3/10** (2006.01)    **A24D 3/16** (2006.01)
**C08L 1/12** (2006.01)

(52) Cooperative Patent Classification (CPC):
**D01F 1/10; A24D 3/16; C08L 1/12; D01F 1/04; D01F 2/28;** A24D 3/10

(86) International application number:
**PCT/JP2019/027400**

(87) International publication number:
**WO 2020/013248 (16.01.2020 Gazette 2020/03)**

(54) **CELLULOSE ACETATE FIBER, CELLULOSE ACETATE TOW BAND, AND METHOD FOR PRODUCING CELLULOSE ACETATE TOW BAND**

CELLULOSEACETATFASER, CELLULOSEACETATSEILBAND UND VERFAHREN ZUR HERSTELLUNG VON CELLULOSEACETATSEILBAND

FIBRE D'ACÉTATE DE CELLULOSE, RUBAN DE CÂBLE D'ACÉTATE DE CELLULOSE, ET PROCÉDÉ DE FABRICATION D'UN RUBAN DE CÂBLE D'ACÉTATE DE CELLULOSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2018 JP 2018132666**

(43) Date of publication of application:
**30.09.2020 Bulletin 2020/40**

(73) Proprietor: **Daicel Corporation Osaka 530-0011 (JP)**

(72) Inventors:
• **MATSUMOTO, Takehiro**
  **Tokyo 108-8230 (JP)**
• **TAMAGAKI, Hiroaki**
  **Tokyo 108-8230 (JP)**

• **TAKAHASHI, Keita**
  **Tokyo 108-8230 (JP)**
• **SHIMA, Takahiko**
  **Tokyo 108-8230 (JP)**

(74) Representative: **Grünecker Patent- und Rechtsanwälte PartG mbB Leopoldstraße 4 80802 München (DE)**

(56) References cited:
**EP-A1- 0 716 117        WO-A1-2015/136573
WO-A1-2015/152335        WO-A1-2016/140307
WO-A1-2017/158639        WO-A1-2017/158639
WO-A1-2018/038051        WO-A1-2018/038051
JP-A- H09 103 281        JP-A- 2018 058 941
US-A1- 2012 325 233      US-A1- 2017 006 912**

## Description

Technical Field

The present invention relates to cellulose acetate fiber, a cellulose acetate band, and a method for producing a cellulose acetate band.

Background Art

Fibers made of cellulose acetate, in particular, cellulose diacetate, are useful as materials, such as materials for cigarette filters used in cigarettes including electronic cigarettes, and materials for absorbers of hygiene products. Cellulose acetate, when used in these applications, is used as a cellulose acetate band composed of a cellulose acetate fiber.

Typically, in dry-spinning cellulose acetate, a spinning dope (also referred to as a "dope") prepared by dissolving cellulose acetate in an organic solvent is extruded from spinneret holes of a spinneret. The solvent in the spinning dope is then evaporated to spin (form a shape of) cellulose acetate. In spinning a cellulose acetate fiber, acetone is often used as the organic solvent included in the spinning dope (Non-Patent Document 1).

As disclosed in Patent Document 1, in producing a cellulose acetate band (hereinafter, also referred to simply as a "band"), a yarn is formed of a plurality of cellulose acetate fibers. A plurality of yarns is combined to form a tow. The tow is crimped to produce a band. The band is packed in a packaging sleeve and compression-packed.

In addition, a sulfuric acid catalyst is used for cellulose acetate in acetylation of the cellulose acetate and is neutralized with calcium acetate or the like in hydrolysis of the cellulose acetate or the like. Furthermore, to prevent hydrolysis of cellulose acetate in drying, an alkaline earth metal is added (Non-Patent Document 2).

The band is required to look beautiful in appearance, thus titanium oxide is added to a spinning dope of the related art to impart a matting effect to the spinning dope, and thus the band looks white. Thus, titanium oxide is normally included in the dope in the related art.

For example, Patent Document 2 describes: "Provided is a cellulose ester fiber combined with a pigment, the pigment acting as a photo-oxidation catalyst, the cellulose ester fiber having a moderate degree of substitution per anhydroglucose (DS/AGU). This fiber is useful as a filter material for tobacco products. The filter material thus provided is easily dispersed and biodegraded and does not remain in the environment."

The object of Patent Document 2 is to increase biodegradability, and Patent Document 2 discloses adding an anatase titanium oxide for this purpose. In addition,

Patent Document 2 discloses examples of a metal useful for increasing thermal oxidation, the metal allowed to coexist as a salt with the anatase titanium oxide, including Cu, Fe, or Ni contained in a form of a salt, such as a nitrate, an acetate, a propionate, a benzoate, or a chloride; or Ca, Mg, Ba, or Zn preferably present as a sulfate or a phosphate; or sodium or potassium present as a sulfate.

Patent Documents 3 and 4 also relate to background information.

Citation List

Patent Documents

Patent Document 1: JP 2004-068198 A
Patent Document 2: JP 08-500152 A
Patent Document 3 : WO 2017/158639
Patent Document 4 : US 2012/325233

Non-Patent Literature

Non-Patent Document 1: Issue edited by: P. Rustemeyer. March 2004. Cellulose Acetates: Properties and Applications. Pages 266-281
Non-Patent Document 2: Macromol. Symp. 2004, Cellulose Acetates: Properties and Applications, 208, Pages 49-60

Summary of Invention

Technical Problem

Improving the production rate of the tow or band means increasing the spinning rate. Thus, increasing the spinning rate while producing the tow or band composed of a fiber with the same single fiber diameter (filament denier) means increasing the rate at which the spinning dope (dope) passes through spinneret holes (the extrusion rate [extrusion amount per unit time] of the dope). However, in attempting to increase the extrusion rate of the dope, the fluidity of the dope has become unstable at the spinneret holes probably due to a problem with solution viscosity of the dope, leading to a problem of an increased frequency of fiber interruption, in particular, fiber interruption immediately below the spinneret (before drying).

The present inventors have found that the cause of this problem is due to titanium oxide dispersed in the spinning dope (dope). In addition, it has been found that when the titanium oxide content is reduced to a certain amount, the frequency of fiber interruption does not increase also in performing a high-speed spinning.

However, it has also been found that the tow spun using such a spinning dope (dope) has certain problems. It has been revealed that when the titanium oxide content is reduced, the spinneret holes are significantly clogged with the passage of spinning time, which is probably due to the loss of the abrasive effect of titanium oxide. In addition, the cellulose acetate band produced by extruding and spinning cellulose acetate from the spinneret holes thus clogged as the passage of spinning time has a reduced pressure drop and thus has a change in quality. In particular, in using the cellulose acetate band as a cigarette filter or the like, its pressure drop will not be stable.

An object of the present invention is to mitigate clogging of spinneret holes which occurs as the passage of spinning time even though cellulose acetate has a small titanium oxide content or contains no titanium oxide and to prevent a reduction in pressure drop of a cellulose acetate band.

Solution to Problem

A first of the present disclosure relates to a cellulose acetate fiber, in which a titanium oxide content is not greater than 0.05 wt.%, a calcium content is not greater than 20 ppm, and a magnesium content is not less than 30 ppm.

A feret area of the cellulose acetate fiber may be not greater than 0.50.

The cellulose acetate fiber may have a filament denier of not less than 1.0 and not greater than 12.0.

A second of the present disclosure relates to a cellulose acetate band composed of the cellulose acetate fiber.

The cellulose acetate band may have a total denier of not less than 8000 and not greater than 44000.

A third aspect of the present disclosure relates to a method for producing a cellulose acetate band, the method including: preparing a spinning dope by dissolving cellulose acetate having a calcium content of not greater than 20 ppm and a magnesium content of not less than 30 ppm; filtering the spinning dope; and spinning the cellulose acetate using the filtered spinning dope; in which titanium oxide is not added until the spinning.

Advantageous Effects of Invention

An embodiment of the present invention can mitigate clogging of spinneret holes which occurs as the passage of spinning time even though cellulose acetate has a small titanium oxide content or contains no titanium oxide and to prevent a reduction in pressure drop of a cellulose acetate band.

Brief Description of Drawings

FIG. 1 is a diagram illustrating a method of deriving a feret area.
FIG. 2 is a conceptual diagram illustrating an apparatus and method for producing a cellulose acetate band according to an embodiment.

Description of Embodiment

In the present specification, terms defined as described below are used.

TD: An abbreviation of a total denier referring to denier (the number of grams per 9000 m) of an assembly of tows (band).

FD: An abbreviation of filament denier, that is, a denier per filament, referring to denier (the number of grams per 9000 m) of a single fiber (one piece of filament). Also referred to as single fiber denier.

Filament: A continuous long fiber; particularly referring to a single fiber extruded from the spinneret hole described below.

Spinneret hole: An orifice of the spinneret described below that extrudes a filament.

Band: Formed by crimping tows (an assembly of filaments). Tows, which are assemblies of filaments (single fibers) that are extruded from each of a plurality of cabinets, are combined, and a TD is set to a predetermined value. The combined crimped tows are called a band. That is, the band has a TD and a crimp-index. The band is packed in a bale form.

Tow: An assembly of the plurality of filaments extruded from spinneret holes. An end and a yarn are each an aspect of the tow.

End: An assembly of filaments having a predetermined total denier obtained by combining (bundling) a plurality of filaments extruded from a plurality of spinneret holes.

Yarn: A bundle of filaments spun from one cabinet. Thus, the yarn is an assembly of filaments before combining.

Cellulose acetate fiber

Cellulose acetate fiber of the present disclosure has a titanium oxide content of not greater than 0.05 wt.%, a calcium content of not greater than 20 ppm, and a magnesium content of not less than 30 ppm.

Titanium oxide content

The cellulose acetate fiber of the present disclosure has a titanium oxide content of not greater than 0.05 wt.%, preferably not greater than 0.03 wt.%, and more preferably not greater than 0.01 wt.%. In addition, the titanium oxide content is most preferably 0 wt.%. This is because fiber interruption, in particular, fiber interruption immediately below a spinneret (before drying), can be reduced. Note that the "0 wt.%" described above includes a case where titanium oxide is not included and a case where only a trace amount of titanium oxide not greater than the detection limit is included.

The titanium oxide content in the cellulose acetate fiber can be measured by atomic absorption spectrometry or the like. In addition, the titanium oxide content in the cellulose acetate can be measured according to "Testing methods for man-made filament yarns" specified in JIS L 1013: 2010. As an instrument used in the testing method specified in this JIS L 1013, an instrument specified in JIS K 0050 can be used. The titanium oxide content can be also measured by gravimetry besides the atomic absorption spectrometry and the JIS method described above.

Calcium content and magnesium content

Calcium and magnesium included in the cellulose acetate fiber of the present disclosure may be derived from a neutralizing agent, a stabilizer, or a wash water used in the production of cellulose acetate. Calcium and magnesium are present, for example, due to deposition on the cellulose acetate flake surface; and due to electrostatic interaction with a carboxyl group included in the cellulose fiber or a sulfate ester moiety formed during production.

The cellulose acetate fiber according to the present disclosure have a calcium content of not greater than 20 ppm, preferably not greater than 10 ppm, and more preferably not greater than 5 ppm. In addition, the calcium content is most preferably 0 wt.%. This is because a reduction in pressure drop in cellulose acetate band can be further prevented. On the other hand, an excess calcium content would readily cause clogging of spinneret holes and would not be able to prevent the reduction in pressure drop of the cellulose acetate band.

The cellulose acetate fiber according to the present disclosure has a magnesium content of not less than 30 ppm and may have a magnesium content of not less than 40 ppm or not less than 60 ppm. The magnesium content is preferably not greater than 80 ppm because the reduction in pressure drop of the cellulose acetate band can be further prevented.

As described below, in the production of cellulose acetate used as a raw material, when an acidic catalyst, such as sulfuric acid, is used as a catalyst, a calcium compound, such as calcium hydroxide; a magnesium compound, such as magnesium acetate; and the like may be added as a neutralizing agent or a stabilizer, or as a neutralizing agent and stabilizer. The contents of calcium and magnesium in the cellulose acetate fiber can be adjusted according to the amounts of the calcium compound and magnesium compound added at this time.

The calcium content and the magnesium content in the cellulose acetate fiber each can be measured by the following method.

To a crucible, 3.0 g of an undried sample is weighed, carbonized on an electric heater, and then incinerated to ash in an electric furnace at not lower than 750°C and 850°C for approximately two hours. The sample is allowed to cool for about 30 minutes, then 25 mL of a 0.07 wt.% hydrochloric acid solution is added, and the sample is heat-dissolved at 220 to 230°C. The solution is allowed to cool, then made to 200 mL with distilled water, and this solution is used as a test liquid. The test liquid and a standard liquid are measured using an atomic absorption spectrophotometer to determine the calcium (Ca) content or the magnesium (Mg) content in the test liquid. These values are converted by the following equation, and the calcium (Ca) content or the magnesium (Mg) content in the sample can be determined. The moisture in the sample can be measured using, for example, a Kett moisture meter (METTLER TOLEDO HB43). About 2.0 g of a sample in a water-containing state is placed on an aluminum sample pan of the Kett moisture meter and heated at 120°C until the weight does not change, and the moisture (wt.%) in the sample can be calculated from the weight change before and after heating.

[Equation 1]

$$\text{Content of Ca or Mg in sample (ppm)} = \frac{\text{Content of Ca or Mg in test liquid (ppm) x 200}}{\text{Sample weight (g) x (1- Moisture (wt.\%)/100)}}$$

Cross-sectional shape

The cross-sectional shape of the cellulose acetate fiber is not particularly limited and may be any of following shapes; a circle, an ellipse, a polygon, a hollow shape, and a heteromorphic shape, such as a Y shape, but is preferably a Y shape. The cellulose acetate fiber with a Y-shaped cross section is highly effective in blocking an airflow and exhibits pressure drop very well, thus providing suitable pressure drop of the cellulose acetate band.

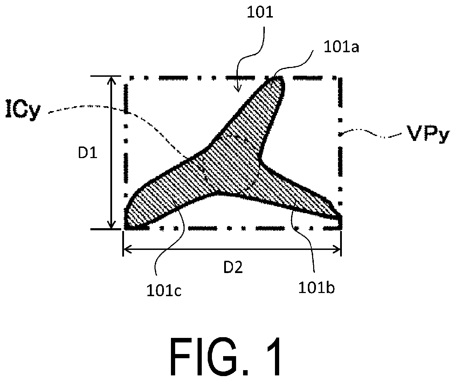

The Y shape will be described with reference to FIG. 1, which illustrates an example of a Y-shaped cross section of a cellulose acetate fiber. In a cellulose acetate fiber 101 with a Y-shaped cross section, regions of the cross section excluding an inscribed circle (ICy) protrude outward from a plurality of portions (three portions) on the circumference of the inscribed circle ICy, and the plurality of portions is separated from each other in the circumferential direction. The plurality of portions is, for example, protrusions 101a, 101b, and 101c.

The cross-sectional shape of the fiber can be observed using an optical microscope, for example, as follows. A pencil-like filament sample is produced from the band. That is, fiber bundles are partially sampled from the band, and the fiber bundles are wrapped with paraffin to place the fiber bundles at a position corresponding to that of the lead in a pencil. The filament sample thus produced is sliced with a microtome into a thickness of 1 $\mu$m to 10 $\mu$m to form a sample slice, and the sample slice can be observed with an optical microscope ("BX-51", available from Olympus Corporation).

To produce the fiber by spinning cellulose acetate, the spinning dope is extruded from a plurality of spinneret holes in a spinneret in which a plurality of spinneret holes is formed as described below, and the cross-sectional shape of the fiber depends on the shape of the spinneret hole. To form the cellulose acetate fiber with the Y-shaped cross section, the shape of the spinneret hole may be triangular.

Feret area

The feret area of the cellulose acetate fiber is not particularly limited but is preferably not greater than 0.5.

When the cross-sectional shape of the cellulose acetate fiber is Y-shaped, the Y-shaped cross section results from the contraction of the triangular shape of the spinneret hole, and thus the feret area is less than 0.5. The feret area of the present disclosure is preferably not greater than 0.48, more preferably not greater than 0.43, and particularly preferably not greater than 0.42. The feret area greater than 0.5 would cause difficulty in achieving pressure drop. The lower limit is not particularly limited but is not less than 0.35. To make the feret area less than 0.35, the shape of the spinneret would be complicated, and this would readily cause clogging or interruption at the spinneret.

"Feret area" is an index that can be utilized to assess the heteromorphism of the fiber cross section. The feret area will be described with reference to FIG. 1, which illustrates an example of a Y-shaped cross section of a cellulose acetate fiber. In deriving the feret area, the fiber is cut at any point perpendicularly to the fiber long axis direction and its cross section can be realized. And then, a virtual parallelogram that circumscribes this cross section is conceived. In this virtual parallelogram, one of the two pairs of facing sides is two parallel lines circumscribing the cross section and having an inter-line distance (D2) that is a maximum value (what is called a "maximum feret diameter"), and another pair is two parallel lines circumscribing the cross-section and having an inter-line distance (D1) that is a minimum value (what is called a "minimum feret diameter"). The feret area is an area ratio determined by dividing the cross-sectional area S of the fiber by the area (D1 x D2) of the virtual parallelogram, in other words, the occupancy rate of the fiber cross section in the virtual parallelogram.

The configuration of the virtual parallelogram VPy circumscribing the cross section of the fiber, the cross-sectional area S of the fiber, and the area (D1 $\times$ D2) of the virtual parallelogram can be measured by processing electronic data of an image captured through a microscope using a well-known image processing technique or by manual calculation based on the captured image.

Filament denier

The filament denier (FD) of the cellulose acetate fiber of the present disclosure is preferably not less than 1.0 and not greater than 12.0, more preferably not less than 1.5 and not greater than 10.0, and even more preferably not less than 2.0 and not greater than 5.0. A production method of the present disclosure can mitigate clogging of spinneret holes which occurs as the passage of spinning time and thus is suitable for producing a thin cellulose acetate fiber as described herein.

The filament denier depends on the diameter of the spinneret hole. To adjust the filament denier to approximately not less than 1.0 and not greater than 12.0, the diameter of the spinneret hole may be approximately not less than 40 $\mu$m and not greater than 100 $\mu$m.

Total degree of acetyl substitution

The total degree of acetyl substitution of cellulose acetate of the cellulose acetate fiber of the present disclosure is preferably not less than 2.41 and not greater than 2.49, more preferably not less than 2.43 and not greater than 2.47, and even more preferably not less than 2.44 and not greater than 2.46. This is because the smaller variation in the degree of substitution can stabilize the extrusion from the spinneret holes.

The total degree of acetyl substitution can be measured by the following method. First, the total degree of acetyl substitution is the sum of each degree of substitution at the 2-, 3-, and 6-positions of the glucose ring of cellulose acetate. The each degree of acetyl substitution at the 2-, 3-, and 6-positions of the glucose ring of cellulose acetate particles can be measured by NMR according to the method of Tezuka (Tezuka, Carbonydr. Res. 273, 83 (1995)). That is, a free hydroxyl group of a cellulose diacetate sample is propionylated with propionic anhydride in pyridine. The resulting sample is dissolved in deuteriochloroform, and the $^{13}$C-NMR spectrum is measured. The carbon signals of the acetyl group appear in the region from 169 ppm to 171 ppm in the order of the 2-, 3-, and 6-positions from the high magnetic field; and the carbonyl carbon signals of the propionyl group appear in the region from 172 ppm to 174 ppm in the same order. Each degree of acetyl substitution at the 2-, 3-, and 6-positions of the glucose ring in the original cellulose diacetate can be determined from the presence ratio of the acetyl group and the propionyl group at the respective corresponding positions. The degree of acetyl substitution can be analyzed by $^{1}$H-NMR in addition to $^{13}$C-NMR.

Furthermore, the total degree of acetyl substitution is determined by converting the degree of acetylation determined according to the method for measuring degree of acetylation in ASTM: D-817-91 (Testing methods for cellulose acetate, etc.). This is the most common procedure to determine the degree of substitution of cellulose acetate.

$$DS = 162.14 \times AV \times 0.01/(60.052 - 42.037 \times AV \times 0.01)$$

In the above equation, DS is the total degree of acetyl substitution, and AV is the degree of acetylation (%). Note that the value of the degree of substitution obtained by the conversion usually has a slight error from the value measured by NMR described above. When the converted value and the value measured by NMR are different, the value measured by NMR is adopted. In addition, if the value varies among the specific methods of NMR measurement, the value measured by NMR according to the method of Tezuka described above is adopted.

The method for measuring the degree of acetylation according to ASTM: D-817-91 (Testing method for cellulose acetate, etc.) is outlined as follows. First, 1.9 g of dried cellulose acetate is sampled and accurately weighed and dissolved in 150 mL of a mixed solution of acetone and dimethyl sulfoxide (a volume ratio of 4:1), then 30 mL of a 1 N aqueous sodium hydroxide solution is added, and the cellulose acetate is saponified at 25°C for 2 hours. Phenol phthalein is added as an indicator, and excess sodium hydroxide is titrated with a 1 N sulfuric acid (concentration factor: F). In addition, a blank test is performed in the same manner as described above, and the degree of acetylation is calculated according to the following equation.

$$\text{Average degree of acetylation (\%)} = \{6.5 \times (B-A) \times F\}/W$$

where A represents the titration volume (mL) of the 1 N sulfuric acid for the sample, B represents the titration volume (mL) of the 1 N sulfuric acid for the blank test, F represents the concentration factor of the 1 N sulfuric acid, and W represents the weight of the sample.

Cellulose acetate band

A cellulose acetate band may be composed of the cellulose acetate fiber of the present disclosure.

The total denier (TD) of the cellulose acetate band is preferably not less than 8000 and not greater than 44000, more preferably not less than 15000 and not greater than 40000, and even more preferably not less than 25000 and not greater than 35000. This is because stable crimping can be applied to the tow and the nonuniformity in exhibiting pressure drop can be reduced.

Method for producing cellulose acetate band

A method for producing a cellulose acetate band of the present disclosure will be described in detail. The method for producing a cellulose acetate band of the present disclosure includes: preparing a spinning dope by dissolving cellulose acetate having a calcium content of not greater than 20 ppm and a magnesium content of not less than 30 ppm; filtering the spinning dope; and spinning the cellulose acetate using the filtered spinning dope; in which titanium oxide is not added until the spinning.

Preparation of spinning dope

The preparation of the spinning dope by dissolving cellulose acetate having a calcium content of not greater than 20 ppm and a magnesium content of not less than 30 ppm will be described.
The spinning dope is prepared by dissolving cellulose acetate used as a raw material in a solvent that can dissolve cellulose acetate. Examples of such a solvent include organic solvents, such as acetone and dichloromethane.
The concentration of cellulose acetate in the spinning dope needs to be adjusted to, for example, not lower than 20 wt.% and not higher than 30 wt.%.
The temperature of the spinning dope needs to be adjusted to, for example, not lower than 45°C and not higher than 55°C.
In the preparation of the spinning dope, titanium oxide is preferably not added, in other words, titanium oxide is preferably not included, but a trace amount of titanium oxide with a content of not greater than approximately 0.05 wt.% may be included in the cellulose acetate band.
In addition, cellulose acetate used as a raw material can be produced as follows. So-called an acetic acid method can be used, in which acetic anhydride is used as an acetylating agent, acetic acid as a diluent, and sulfuric acid as a catalyst. In pretreatments, a cellulose material, such as pulp or linter, is ground, and acetic acid containing or not containing a sulfuric acid catalyst is added. Then, acetic acid, acetic anhydride, and a sulfuric acid catalyst that have been cooled are added to perform acetylation with a kneader while the temperature is controlled with an external jacket (acetylation). Fully trisubstituted cellulose acetate (primary acetate) is produced by acetylation, then the viscous, fully trisubstituted cellulose acetate is charged into a hydrolysis vessel, a neutralizing agent, such as a magnesium acetate solution, is added to neutralize (fully neutralize or partially neutralize) sulfuric acid with magnesium or the like and to inactivate and hydrolyze acetic anhydride with moisture contained in the magnesium acetate solution or the like, and cellulose acetate with a desired degree of acetylation is produced (aging). A large amount of water is added to this cellulose acetate (secondary acetate) to precipitate cellulose acetate (precipitation). The precipitated cellulose acetate is separated by solid-liquid separation and washed (purification), and dried to obtain cellulose acetate (drying). In washing with water in washing the precipitated cellulose acetate, an alkali metal compound and/or an alkaline earth metal compound, in particular, a magnesium acetate solution and a calcium compound, such as calcium hydroxide, may be added as a stabilizer.
The contents of calcium and magnesium in the cellulose acetate fiber and cellulose acetate band can be adjusted according to the amounts of the calcium compound and magnesium compound added at this time.
In the production of cellulose acetate that is used as a raw material, magnesium acetate is preferably used as a stabilizer. This is because use of calcium hydroxide would readily increase the calcium contents in the cellulose acetate fiber and cellulose acetate band, causing difficulty in preventing the reduction in pressure drop.

Filtration

Filtration of the spinning dope will be described. To remove foreign matter in the spinning dope, the method of filtration is not particularly limited. Examples of the method of filtration include filter filtration.
Examples of a filter medium for the filter filtration include filter media made of cellulose, synthetic fiber, and a metal material, such as stainless steel, as the main material.
In addition, the filter filtration preferably includes a plurality of filtrations. This is because a filtration performed in a single filtration would significantly shorten the life of the filter media and would readily reduce productivity. In including a plurality of filtrations, a multi-stage filtration method is preferably employed.

Spinning

The spinning of cellulose acetate using the spinning dope will be described. The spinning dope is extruded from a plurality of spinneret holes in a spinneret in which a plurality of spinneret holes is formed. The organic solvent in the extruded spinning dope is evaporated with hot air to dry the cellulose acetate. Then, the cellulose acetate is wound with a roll to obtain the cellulose acetate band.

For example, to adjust the filament denier of the cellulose acetate fiber to not less than 1.0 and not greater than 12.0, for example, the diameter of the spinneret hole may be set to not less than 40 $\mu$m and not greater than 100 $\mu$m, and the extrusion rate in extruding the spinning dope from the spinneret holes may be set to a range of not lower than 500 m/min and not higher than 900 m/min.

In addition, to adjust the total denier of the cellulose acetate band to not less than 8000 and not greater than 44000, the diameter of the spinneret hole may be set to not less than 40 $\mu$m and not greater than 100 $\mu$m, and the number of spinneret holes may be set to a range of not less than 100 and not greater than 1000.

Titanium oxide

In the method for producing a cellulose acetate band of the present disclosure, titanium oxide is not added until the spinning, and thus titanium oxide is not included, or, if included, the titanium oxide content can be greatly reduced. Thus, the frequency of fiber interruption does not increase even when a high-speed spinning is performed. Furthermore, in extruding the spinning dope (dope) containing titanium oxide from the spinneret holes, increasing the extrusion rate in extruding the spinning dope (dope) from the spinneret holes may problematically destabilize the fluidity of the dope in the spinneret holes, probably due to a problem of solution viscosity of the spinning dope (dope), but this problem can also be solved.

Production apparatus for cellulose acetate band

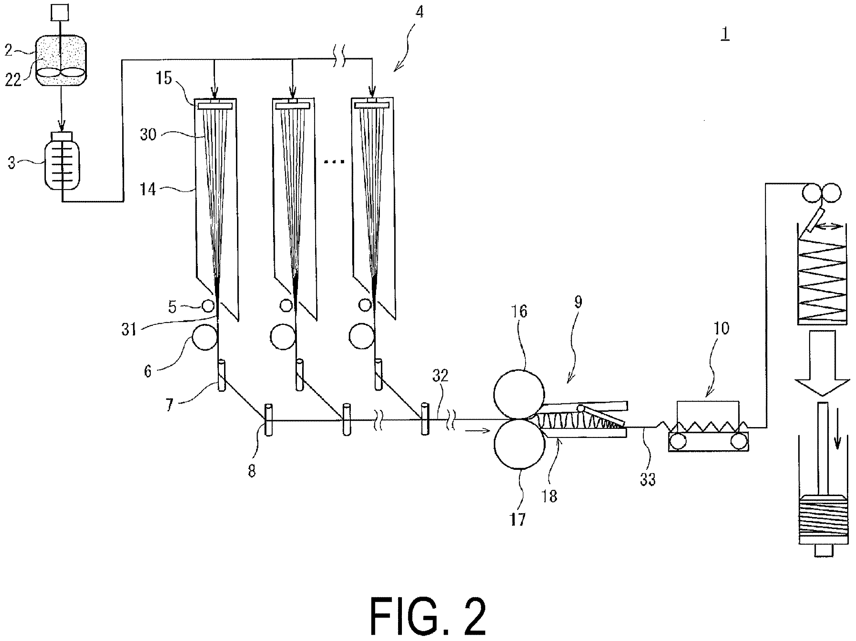

FIG. 2 is a general view of a production apparatus 1 for cellulose acetate band (hereinafter, also referred to as "the production apparatus 1"). The production apparatus 1 produces a band 33 by a dry spinning method.

In the production apparatus 1, a spinning dope 22 in which cellulose acetate flakes used as a raw material are dissolved in an organic solvent is used. This spinning dope 22 is mixed in a mixing apparatus 2 and then filtered in a filtration apparatus 3. The spinning dope 22 that has passed through the filtration apparatus 3 is extruded from a plurality of spinneret holes of a spinneret 15 provided on a cabinet 14 of a spinning unit 4. The cabinet 14 may be cylindrical. The spinning dope 22 extruded from each spinneret hole is dried by evaporating the organic solvent with hot air supplied into the cabinet 14 from a drying unit (not illustrated). Solid filaments 30 are thus formed.

The filaments 30 are guided with guide pins 7 and 8, which are guiding devices (also referred to as a "guiding"). In these guiding devices, a width of a line of a plurality of the filaments 30 is adjusted by a width-adjusting guide. The plurality of the filaments 30 that has passed through one cabinet 14 are gathered by the width-adjusting guide and formed into a yarn 31. The yarn 31 may be subjected to application of a lubricant (herein, a lubricant emulsion) by a lubrication unit 5 (as an example, a rotating roll) while the yarn 31 is being guided by the guide pins 7 and 8.

The width of a line of the yarn 31 is then adjusted and further narrowed by the guide pins 7 and 8. Thereafter, the yarn 31 is wound with a godet roll 6. The yarn 31 travels around the roll surface of the godet roll 6 only for about 3/4 of the surface and then is taken up by a predetermined winding apparatus. A series of units for producing the yarn 31, that is, the spinning unit 4 extruding the spinning dope 22 from the spinneret 15 to spin the filaments 30, the drying unit, the lubrication unit 5, and a winding unit having the godet roll 6, is collectively referred to as a "station". Typically, a plurality of stations is arranged in a line.

The yarn 31 is taken up from the roll surface of the godet roll 6 in a horizontal direction by the winding apparatus. The guide pins 7 and 8 change the direction of guiding the yarn 31, which passed through each station, by 90°. Each yarn 31 is transported along the arrangement direction of the stations and sequentially accumulated or stacked. A plurality of the yarns 31 is thus bundled to form an end (a tow) 32, which is a flat assembly of the yarns 31. The end 32 is formed by bundling a plurality of the yarns 31 and finally setting a total denier to a predetermined total denier. The end 32 is transported in a horizontal state and guided to a crimping apparatus 9.

The crimping apparatus 9 has a pair of nip rolls 16 and 17 for pushing the end 32 into a stuffing box (crimping box) 18. As the pair of the nip rolls 16 and 17 push the end 32 into the stuffing box 18, the end 32 receives resistance from inside of the stuffing box 18. However, the pair of the nip rolls 16 pushes the end 32 into the stuffing box 18 with a force larger than this resistance, imparting crimping to the end 32. A band 33 is thus produced. The band 33 that has passed through the crimping apparatus 9 is dried with a drying apparatus 10. The band 33 that has passed through the drying apparatus 10 is accumulated, then subjected to compression packing to produce a bale.

**EP 3 715 509 B1**

Examples

Hereinafter, the present invention will be described specifically with reference to examples, but the technical scope of the present invention is not limited by these examples.

Each physical property of Examples, Comparative Example, and Reference Example described below were evaluated according to the following methods.

Titanium oxide content in cellulose acetate band

The titanium oxide content in cellulose acetate band was measured as follows.

a) The absolute dry weight of about 5 g of a sample was determined, and the sample was incinerated to ash in an electric furnace while avoiding intense heat. The ash was transferred into a 200-mL beaker with a small amount of water, and then water was removed by heating the beaker. Thereafter, 15 mL of concentrated sulfuric acid (guaranteed reagent; specific gravity: 1.84) stipulated in JIS K 8951 and approximately 10 g of ammonium sulfate (guaranteed reagent) stipulated in JIS K 8960 were added and covered by a watch glass. The mixture was heated on a sand bath gradually at the beginning and intensely at the end until the liquid turned transparent.

b) The liquid was allowed to cool, then water was carefully added to make the total amount approximately 100 mL while ensuring the liquid temperature not to reach 50°C or higher. The mixture was transferred to a 1-L volumetric flask and diluted with water up to the graduation marking. From this liquid, A mL (an amount which gives absorbance of a color reagent to be from 0.3 to 0.5, depending on the content of titanium oxide and the thickness of a cell) of the liquid was transferred to a 50 mL volumetric flask using a pipet. Then, 5 mL of hydrogen peroxide (3%, guaranteed reagent) stipulated in JIS K 8230 and 10 mL of 1 mol/L sulfuric acid (guaranteed reagent) stipulated in JIS K 8951 were added to the liquid in the volumetric flask to develop a color. Thereafter, the liquid was diluted with water up to the graduated marking.

c) This liquid in the volumetric flask was transferred to a cell, and the absorbance at a wavelength of 420 nm was measured with a photoelectric colorimeter. Using a calibration curve produced in advance, the titanium oxide concentration (g/50 mL) was determined based on the measurement. The percentage of the titanium oxide was then calculated by the following Equation. An average value of two measurements was rounded to two decimal places by Rule B specified in JIS Z 8401 (rounding method).

$$T1 \ (wt.\%) = ((B \times 1000)/(C \times A)) \times 100$$

where T1 is the content (%) of titanium oxide, A is the volume (mL) of the diluted liquid collected, B is the titanium oxide concentration (g/50 mL), and C is the absolute dry weight (g) of the sample.

Calcium content and magnesium content in raw material cellulose acetate and cellulose acetate band

Into a crucible, 3.0 g of an undried sample was weighed and carbonized on an electric heater, and then incinerated to ash in an electric furnace at not lower than 750°C and 850°C for approximately 2 hours. The sample was allowed to cool for about 30 minutes, then 25 mL of a 0.07 wt.% hydrochloric acid solution was added, and the sample was heat-dissolved at not lower than 220°C and not higher than 230°C. The solution was allowed to cool, then made to 200 mL with distilled water, and this solution was used as a test liquid. The test liquid and a standard liquid were measured using an atomic absorption spectrophotometer to determine the calcium (Ca) content or the magnesium (Mg) content in the test liquid. These values were converted by the following equation, and the calcium (Ca) content or the magnesium (Mg) content in the sample were determined. The moisture in the sample can be measured using, for example, a Kett moisture meter (METTLER TOLEDO HB43). About 2.0 g of a sample in a water-containing state is placed on an aluminum sample pan of the Kett moisture meter and heated at 120°C until the weight does not change, and the moisture (wt.%) in the sample can be calculated from the weight change before and after heating.

[Equation 2]

$$\text{Content of Ca or Mg in sample (ppm)} = \frac{\text{Content of Ca or Mg in test liquid (ppm)} \times 200}{\text{Sample weight (g)} \times (1 - \text{Moisture (wt.\%)}/100)}$$

Pressure drop: Evaluation of pressure drop (PD)

A band was cut to a predetermined length and formed into a plug. The length (mm), circumference (mm), and net tow weight (NTW: g/rod) were determined in advance, and pressure drop (PD, mmWG) was measured at an air flow rate of 17.5 ml/sec using an automatic pressure drop meter ("QTM-6", available from CERULEAN, UK). This measurement result is a measured value of the pressure drop.

In addition, to evaluate a change in a pressure drop due to the time of use of the spinneret, that is, a change in pressure drop which occurs as the passage of spinning time, a reduction rate (%) of the pressure drop in the average number of days of use (days) of the spinneret and the reduction rate (%) of the pressure drop per day were determined by the following method.

$$\text{Reduction rate (\%) of pressure drop in average number of days of use of spinneret} = \{\text{measured value (mmWG) of pressure drop - corrected value (mmWG) of pressure drop}\}/\text{corrected value (mmWG) of pressure drop x 100}$$

Corrected value (mmWG) of pressure drop: Measured value of pressure drop x 1 + 0.003 x ((FD (day 0) - FD (relevant day))/0.01 + (crimp-index (day 0) - crimp-index (relevant day)))

Crimp-index: measured according to a measurement method described in JP 07-316975 A by capturing an image of a surface of a band illuminated with light by imaging means and processing the captured image with a computer.

In addition, the average number of days of use of the spinneret (days) is the average value of the number of days of using one or two or more spinnerets when the cellulose acetate bands are continuously produced. When one or some spinnerets were replaced with a new spinneret or spinnerets during the production of cellulose acetate bands, the average number of days of use (days) was calculated by counting the day of the replacement as day 0.

The reduction rate (%) of the pressure drop per day is a slope of a regression line with an intercept of 0 prepared by plotting the average number of days of use (days) of the spinneret in the horizontal axis and the reduction rate (%) of the pressure drop in the vertical axis and determined by the least squares method.

Example 1

A spinning dope was prepared by dissolving 29.0 parts by weight of cellulose acetate (total degree of acetyl substitution: 2.45) having a calcium content of 12 ppm and a magnesium content of 71 ppm in 68.5 parts by weight of acetone and 2.5 parts by weight of water. Titanium oxide was not added, and thus the content of the titanium oxide in the spinning dope was 0 wt.%.

In addition, 27 cabinets having a spinneret in which 400 spinneret holes each having a triangular orifice with a side length of 50 $\mu$m were formed were prepared. The spinning dope was heated to 50°C and filtered with a filtration apparatus, then extruded from the spinneret holes of the spinneret, and cellulose acetate was spun. The spinning speed (winding rate of a pair of nip rolls) at this time was set to 600 m/min.

The spinning dope was extruded, and from the formed single fiber (filament), an end was produced. The ends were crimped with a crimping apparatus, and a cellulose acetate band was obtained. The filament denier (FD) of the cellulose acetate fiber was set to 2.6, and the total denier (TD) was set to 27000. In addition, the crimp-index of the cellulose acetate band was set to 34.0 per inch. The evaluation results of the resulting cellulose acetate band are shown in Table 1.

Example 2

A spinning dope was prepared by dissolving 29.0 parts by weight of cellulose acetate (total degree of acetyl substitution: 2.45) having a calcium content of 11 ppm and a magnesium content of 39 ppm in place of the cellulose acetate in Example 1 in 68.5 parts by weight of acetone and 2.5 parts by weight of water. Titanium oxide was not added, and thus the content of the titanium oxide in the spinning dope was 0 wt.%.

In addition, 34 cabinets having a spinneret in which 320 spinneret holes each having a triangular orifice with a side length of 56 $\mu$m were formed were prepared. The spinning dope was heated to 50°C and filtered with a filtration apparatus, then extruded from the spinneret holes of the spinneret, and cellulose acetate was spun. The spinning speed (winding rate of a pair of nip rolls) at this time was set to 600 m/min.

The spinning dope was extruded, and from the formed single fiber (filament), an end was produced. The ends were crimped with a crimping apparatus, and a cellulose acetate band was obtained. The filament denier (FD) of the cellulose acetate fiber was set to 3.0, and the total denier (TD) was set to 30000. In addition, the crimp-index of the cellulose acetate band was set to 36.0 per inch. The evaluation results of the resulting cellulose acetate band are shown in Table 1.

Comparative Example 1

A cellulose acetate band was produced in the same manner as in Example 2 except for using cellulose acetate (total degree of acetyl substitution: 2.45) having a calcium content of 60 ppm and a magnesium content of 5 ppm in place of the cellulose acetate in Example 2. The evaluation results of the resulting cellulose acetate band are shown in Table 1.

Reference Example 1

A cellulose acetate band was produced in the same manner as in Example 2 except for using a spinning dope prepared by dissolving 28.9 parts by weight of cellulose acetate (total degree of acetyl substitution: 2.45) having a titanium oxide content of 0 wt.%, a calcium content of 60 ppm, and a magnesium content of 5 ppm in place of the spinning dope in Example 2 in 68.5 parts by weight of acetone and 2.5 parts by weight of water, and further adding 0.1 parts by weight of titanium oxide. The evaluation results of the resulting cellulose acetate band are shown in Table 1.

EP 3 715 509 B1

[Table 1]

| | Raw material cellulose acetate | | Band | | | | | Plug conditions | | | Pressure drop reduction rate (%/day) | Evaluation of pressure drop | |
|---|---|---|---|---|---|---|---|---|---|---|---|---|---|
| | Ca amount (ppm) | Mg amount (ppm) | FD | TD | Titanium oxide amount (wt.%) | Ca amount (ppm) | Mg amount (ppm) | Length (mm) | Circumference (mm) | NTW (g/rod) | | Change in pressure drop over time | |
| Example 1 | 12 | 71 | 2.6 | 27000 | 0 | 12 | 71 | 108 | 24 | 0.5 | -0.42 | Average days of use of spinneret (days) | 0.0, 2.0, 3.0, 3.9, 4.9, 5.9, 6.9, 7.9, 8.9, 9.9, 10.9, 11.9, 12.9, 14.9, 15.9, 16.9, 17.9, 18.9, 19.1, 20.1, 21.1 |
| | | | | | | | | | | | | PD (mmWG) (measured value) | 328, 321, 323, 326, 323, 323, 322, 320, 321, 310, 311, 314, 310, 309, 307, 300, 300, 298, 304, 302, 300 |
| | | | | | | | | | | | | PD (mmWG) (corrected value) | 328, 326, 326, 330, 329, 329, 329, 326, 328, 329, 327, 328, 329, 327, 329, 328, 326, 330, 327, 326, 329 |
| | | | | | | | | | | | | PD reduction rate (%) | 0.0, -1.5, -0.9, -1.2, -1.8, -1.8, -2.1, -1.8, -2.1, -5.8, -4.9, -4.3, -5.8, -5.5, -6.7, -8.5, -8.0, -9.7, -7.0, -7.4, -8.8 |

| | Raw material cellulose acetate | | Band | | | | | Plug conditions | | | Pressure drop reduction rate (%/day) | Evaluation of pressure drop | | | | | | | | | | | | | |
|---|---|---|---|---|---|---|---|---|---|---|---|---|---|---|---|---|---|---|---|---|---|---|---|---|---|
| | Ca amount (ppm) | Mg amount (ppm) | FD | TD | Titanium oxide amount (wt.%) | Ca amount (ppm) | Mg amount (ppm) | Length (mm) | Circumference (mm) | NTW (g/rod) | | Change in pressure drop over time | | | | | | | | | | | |
| Example 2 | 11 | 39 | 3.0 | 30000 | 0 | 11 | 39 | 108 | 24.33 | 0.555 | -0.36 | Average days of use of spinneret (days) | 0.0 | 1.0 | 2.0 | 3.0 | 4.8 | 5.6 | 6.6 | 6.6 | 7.6 | 7.5 | 8.5 | 9.5 |
| | | | | | | | | | | | | PD (mmWG) (measured value) | 335 | 336 | 338 | 338 | 339 | 333 | 330 | 332 | 283 | 283 | 283 | 283 |
| | | | | | | | | | | | | PD (mmWG) (corrected value) | 335 | 338 | 339 | 340 | 341 | 342 | 340 | 339 | 293 | 291 | 290 | 294 |
| | | | | | | | | | | | | PD reduction rate (%) | 0.0 | -0.6 | -0.3 | -0.6 | -0.6 | -2.6 | -2.9 | -2.1 | -3.4 | -2.7 | -2.4 | -3.7 |

| | Raw material cellulose acetate | | Band | | | | | Plug conditions | | | Pressure drop reduction rate (%/day) | Evaluation of pressure drop | | | | | | | | | | |
| | Ca amount (ppm) | Mg amount (ppm) | FD | TD | Titanium oxide amount (wt. %) | Ca amount (ppm) | Mg amount (ppm) | Length (mm) | Circumference (mm) | NTW (g/rod) | | Change in pressure drop over time | | | | | | | | | | |
| Comparative Example 1 | 60 | 5 | 3.0 | 30000 | 0 | 60 | 5 | 108 | 24.33 | 0.555 | -0.80 | Average days of use of spinneret (days) | 0.0 | 1.0 | 2.0 | 3.9 | 4.88 | 6.9 | 7.0 | 7.37 | 8.51 | 13.2 |
| | | | | | | | | | | | | PD (mmWG) (measured value) | 331 | 322 | 322 | 302 | 310 | 307 | 302 | 324 | 322 | 319 |
| | | | | | | | | | | | | PD (mmWG) (corrected value) | 331 | 330 | 330 | 317 | 326 | 325 | 327 | 345 | 346 | 347 |
| | | | | | | | | | | | | PD reduction rate (%) | 0.0 | -2.4 | -2.4 | -4.7 | -4.9 | -5.5 | -7.6 | -6.1 | -6.9 | -8.1 |

| | Raw material cellulose acetate | | Band | | | | | Plug conditions | | | Pressure drop reduction rate (%/day) | Evaluation of pressure drop | | | | | | |
|---|---|---|---|---|---|---|---|---|---|---|---|---|---|---|---|---|---|---|
| | Ca amount (ppm) | Mg amount (ppm) | FD | TD | Titanium oxide amount (wt. %) | Ca amount (ppm) | Mg amount (ppm) | Length (mm) | Circumference (mm) | NTW (g/rod) | | Change in pressure drop over time | | | | | | |
| Reference Example 1 | 60 | 5 | 3.0 | 30000 | 0.5 | 60 | 5 | 108 | 24.6 | 0.5 | -0.31 | Average days of use of spinneret (days) | 0.0 | 6.0 | 12.0 | 17.0 | 19.0 | |
| | | | | | | | | | | | | PD (mmWG) (measured value) | 280 | 276 | 274 | 275 | 270 | |
| | | | | | | | | | | | | PD (mmWG) (corrected value) | 280 | 286 | 286 | 288 | 286 | |
| | | | | | | | | | | | | PD reduction rate (%) | 0.0 | -3.5 | -4.2 | -4.5 | -5.6 | |

As shown in Table 1, the band of Comparative Example had a titanium oxide content of 0 wt.% and thus had a very large reduction rate of the pressure drop (%/day). In contrast, the production method of Examples, despite the titanium oxide content of 0 wt.%, achieves a small reduction rate of the pressure drop (%/day) over the spinning time, the reduction rate equivalent to that of a band having a titanium oxide content of greater than 0.05 wt.% (Reference Example 1), and can prevent the reduction in pressure drop of the cellulose acetate band.

**Claims**

1. A cellulose acetate fiber, wherein

   a titanium oxide content is not greater than 0.05 wt.%;
   a calcium content is not greater than 20 ppm; and
   a magnesium content is not less than 30 ppm, and wherein said contents are determined according to the methods specified in the description.

2. The cellulose acetate fiber according to claim 1, wherein a feret area of the cellulose acetate fiber is not greater than than 0.50, and wherein FIG. 1 shows a diagram illustrating the method of deriving said feret area.

3. The cellulose acetate fiber according to claim 1 or 2, wherein a filament denier is not less than 1.0 and not greater than 12.0.

4. The cellulose acetate fiber according to any of claims 1 to 3, wherein a titanium oxide content is not greater than 0.01 wt.%.

5. The cellulose acetate fiber according to any of claims 1 to 4, wherein a titanium oxide content is 0 wt.%.

6. A cellulose acetate band comprising the cellulose acetate fiber described in any one of claims 1 to 5.

7. The cellulose acetate band according to claim 6, wherein a total denier is not less than 8000 and not greater than 44000.

8. A method for producing a cellulose acetate band, the method comprising:

   preparing a spinning dope by dissolving cellulose acetate having a calcium content of not greater than 20 ppm and a magnesium content of not less than 30 ppm;
   filtering the spinning dope; and
   spinning the cellulose acetate using the filtered spinning dope;
   wherein titanium oxide is not added until the spinning.

**Patentansprüche**

1. Celluloseacetatfaser, wobei

   ein Titanoxidgehalt nicht mehr als 0,05 Gew.-% beträgt;
   ein Calciumgehalt nicht mehr als 20 ppm beträgt und
   ein Magnesiumgehalt nicht weniger als 30 ppm beträgt, und wobei die Gehalte gemäß den in der Beschreibung angegebenen Verfahren bestimmt werden.

2. Celluloseacetatfaser gemäß Anspruch 1, wobei eine Feret-Fläche der Celluloseacetatfaser nicht größer als 0,50 ist und wobei Abb. 1 ein Diagramm zeigt, welches das Verfahren zum Ableiten der Feret-Fläche veranschaulicht.

3. Celluloseacetatfaser gemäß Anspruch 1 oder 2, wobei ein Filament-Denier nicht weniger als 1,0 und nicht mehr als 12,0 beträgt.

4. Celluloseacetatfaser gemäß einem der Ansprüche 1 bis 3, wobei ein Titanoxidgehalt nicht mehr als 0,01 Gew.-% beträgt.

**5.** Celluloseacetatfaser gemäß einem der Ansprüche 1 bis 4, wobei ein Titanoxidgehalt 0 Gew.-% beträgt.

**6.** Celluloseacetatband, umfassend die in einem der Ansprüche 1 bis 5 beschriebene Celluloseacetatfaser.

**7.** Celluloseacetatband gemäß Anspruch 6, wobei ein Gesamt-Denier nicht weniger als 8000 und nicht mehr als 44000 beträgt.

**8.** Verfahren zum Herstellen eines Celluloseacetatbands, wobei das Verfahren umfasst:

Herstellen einer Spinnlösung durch Lösen von Celluloseacetat mit einem Calciumgehalt von nicht mehr als 20 ppm und einem Magnesiumgehalt von nicht weniger als 30 ppm;
Filtrieren der Spinnlösung und
Spinnen des Celluloseacetats unter Verwendung der filtrierten Spinnlösung;
wobei Titanoxid erst beim Spinnen zugegeben wird.

**Revendications**

**1.** Fibre d'acétate de cellulose, dans laquelle

une teneur en oxyde de titane n'est pas supérieure à 0,05 % en poids ;
une teneur en calcium n'est pas supérieure à 20 ppm ; et
une teneur en magnésium n'est pas inférieure à 30 ppm, et dans laquelle lesdites teneurs sont déterminées selon des méthodes spécifiées dans la description.

**2.** Fibre d'acétate de cellulose selon la revendication 1, dans laquelle une aire de Féret de la fibre d'acétate de cellulose n'est pas supérieure à 0,50, la FIG. 1 présentant un diagramme illustrant la méthode de détermination de ladite aire de ferret.

**3.** Fibre d'acétate de cellulose selon la revendication 1 ou 2, un denier de filament n'étant pas inférieur à 1,0 et pas supérieur à 12,0.

**4.** Fibre d'acétate de cellulose selon l'une quelconque des revendications 1 à 3, dans laquelle une teneur en oxyde de titane n'est pas supérieure à 0,01 % en poids.

**5.** Fibre d'acétate de cellulose selon l'une quelconque des revendications 1 à 4, dans laquelle une teneur en oxyde de titane est de 0 % en poids.

**6.** Ruban d'acétate de cellulose comprenant la fibre d'acétate de cellulose décrite dans l'une quelconque des revendications 1 à 5.

**7.** Ruban d'acétate de cellulose selon la revendication 6, dans lequel un denier total n'est pas inférieur à 8000 et pas supérieur à 44 000.

**8.** Procédé de production d'un ruban d'acétate de cellulose, le procédé comprenant :

la préparation d'une solution à filer par dissolution d'acétate de cellulose ayant une teneur en calcium non supérieure à 20 ppm et une teneur en magnésium non inférieure à 30 ppm ;
le filtrage de la solution à filer ; et
la filature de l'acétate de cellulose à l'aide de la solution à filer filtrée ;
la teneur en oxyde de titane n'étant pas ajoutée jusqu'à la filature.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004068198 A
- JP 8500152 A
- WO 2017158639 A
- US 2012325233 A
- JP 7316975 A

### Non-patent literature cited in the description

- **P. RUSTEMEYER.** Cellulose Acetates: Properties and Applications. March 2004, 266-281
- Cellulose Acetates: Properties and Applications. *Macromol. Symp.,* 2004, vol. 208, 49-60
- **TEZUKA.** *Carbonydr. Res.,* 1995, vol. 273, 83